Europäisches Patentamt

European Patent Office

Office européen des brevets

(11) Numéro de publication: **0 231 409 B1**

## FASCICULE DE BREVET EUROPEEN

(45) Date de publication de fascicule du brevet:
**11.09.91**

(51) Int. Cl.⁵: **G06K 7/06, G06K 13/08**

(21) Numéro de dépôt: **86101325.8**

(22) Date de dépôt: **01.02.86**

(54) Lecteur de cartes.

(43) Date de publication de la demande:
**12.08.87 Bulletin 87/33**

(45) Mention de la délivrance du brevet:
**11.09.91 Bulletin 91/37**

(84) Etats contractants désignés:
**AT BE CH DE FR GB IT LI LU NL SE**

(56) Documents cités:
**EP-A- 0 139 540**
**EP-A- 0 139 593**
**FR-A- 2 552 252**
**US-A- 4 004 133**

(73) Titulaire: **GRUNDIG E.M.V. Elektro-Mechanische Versuchsanstalt Max Grundig holländ. Stiftung & Co. KG.**
**Kurgartenstrasse 37**
**W-8510 Fürth/Bay.(DE)**

(72) Inventeur: **Vosseler, Manfred**
**5, Place Valladier**
**F-57000 Metz(FR)**
Inventeur: **Kronmeister, Ludwig**
**Nibelungenstrasse 47**
**W-8508 Wendelstein 2(DE)**
Inventeur: **Krieger, Peter**
**Spessartstrasse 24**
**W-8500 Nürnberg(DE)**

Rank Xerox (UK) Business Services

**Description**

La présente invention a pour objet un lecteur de cartes.

On connaît déjà, dans l'état actuel de la technique, des lecteurs de cartes électroniques qui sont pour l'instant principalement utilisés dans l'industrie bancaire et dans certaines cabines téléphoniques.

Les lecteurs connus se composent d'un ensemble de circuits électroniques pour le traitement des informations renfermées par la carte à mémoire. Cependant, pour que les informations contenues par la carte puissent être rendues accessibles au lecteur, celui-ci comporte en outre une fente permettant l'introduction de la carte dans l'appareil, et un ensemble de moyens d'entraînement et de positionnement de contacts pour la lecture de la carte.

Dans l'état actuel de la technique, la carte à lire est le plus souvent positionnée de manière à ce que ses zones de contact soient disposées en regard d'un ensemble d'aiguilles de contact situées dans l'appareil, le contact mécanique ne s'établissant qu'au moment où la carte est complètement introduite.

Dans les lecteurs de cartes actuellement utilisés, les contacts situés dans l'appareil sont constitués par des pointes de lecture très courtes et très rigides qui sont, en fait, des contacts de haute précision d'un prix prohibitif. De ce fait, les lecteurs de carte actuellement connus se caractérisent par des prix élevés situés le plus souvent dans une fourchette de deux mille cinq cents à dix mille francs, hors taxes. Il en résulte que les applications de ces cartes se sont pour le moment limitées à des applications professionnelles, notamment dans les milieux bancaires et annexes.

Un lecteur de cartes à mémoire électronique est décrit au document EP-A-0 139 593 comprenant une carte à pistes conductrices pour le traitement et/ou la consultation des données renfermées par la carte à mémoire et des contacts métalliques flexibles qui coopèrent avec des moyens de guidage et de positionnement de leurs extrémités libres ainsi qu'avec des moyens de guidage et de positionnement de la carte à mémoire.

Les contacts métalliques ont une extrémité solidaire de la carte à pistes conductrices et connectée électrique ment à l'une de ses bornes par positionnement dans ses orifices prévus. L'autre extrémité restant libre pour contacter les plages électriques de la carte à mémoire. En outre, un micro-interrupteur, disposé au fond du passage de la carte à mémoire, est actionné par l'arrivée de celle-ci en fin de course pour sa mise sous tension.

Un boîtier lecteur pourvu d'une fente frontale d'introduction est, par exemple, connu par le document EP-A-0 139 540.

Outre la fente frontale d'introduction et de positionnement manuels de la carte à mémoire, le boîtier décrit se compose d'une partie inférieure portant la carte des éléments de contacts sur des ailes verticales, d'une partie médiane et d'un couvercle. De plus, les éléments de contact sont guidés et positionnés par des fentes longitudinales calibrées et par d'autres éléments de la partie médiane du boitier. Enfin, la carte de contact est positionnée par des butées verticales rattachées au couvercle du boîtier.

Par conséquent, un des buts de la présente invention est de proposer un lecteur de cartes à mémoire permettant un usage grand public desdites cartes à mémoire, et qui, de ce fait, doit être d'une grande simplicité, mais surtout d'un coût très réduit, obtenu par une fabrication en grande série.

Un autre but de la présente invention est de proposer un lecteur de cartes à mémoire qui permette, de par ses caractéristiques, de généraliser l'emploi des cartes à mémoire à des applications domestiques, par exemple pour le paiement à domicile de prestations diverses telles que notamment les redevances télévisuelles versées à des chaînes privées, ou les opérations bancaires à domicile.

Le lecteur de cartes selon l'invention est caractérisé en revendication 1.

L'invention sera bien comprise en se référant à la description suivante faite à titre d'exemple non limitatif et au dessin ci-annexé dans lequel :

- la figure 1 est une vue de dessus de la partie inférieure du lecteur de cartes à mémoire selon l'invention
- la figure 2 est une vue de côté de la partie du boîtier représentée figure 1
- la figure 3 est une vue en plan de la carte à circuit imprimé
- la figure 4 est une vue d'un micro-interrupteur utilisé dans le lecteur de cartes selon l'invention et représenté en vue en plan
- la figure 5 est une vue de côté du micro-interrupteur de la figure 4
- la figure 6 est une vue de dessus de la partie médiane du boîtier du lecteur de cartes selon l'invention
- la figure 7 est une vue de côté de la partie médiane du boîtier représenté figure 6, selon un plan de coupe IV-IV
- la figure 8 est une vue en coupe éclatée des parties inférieure, médiane et supérieure du boîtier, selon des plans de coupe respectifs I-I, V-V et VI-VI.
- la figure 9 est une vue en élévation de la partie frontale du boîtier du lecteur de cartes conforme à l'invention
- la figure 10 est une vue de dessous de la partie supérieure du boîtier du lecteur de cartes conforme à l'invention
- la figure 11 est une vue de côté de la partie supérieure représentée figure 10
- les figures 12 et 13 sont des vues en élévation de deux types de contacts électriques positionnés sur le circuit imprimé de la figure 3.

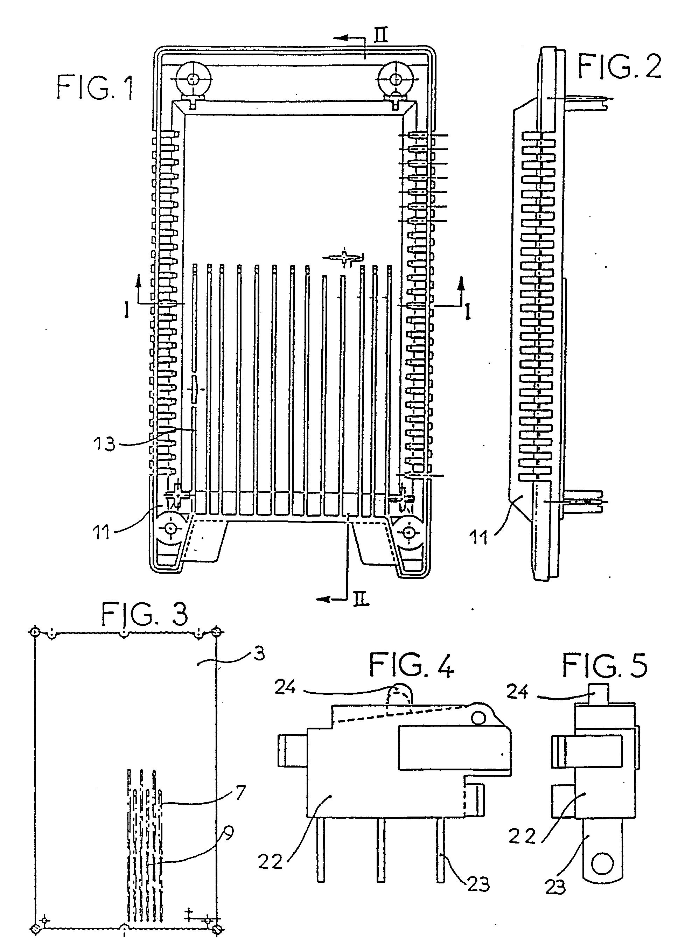

On se réfère aux figures 1, 2, 3 et 9.

Le lecteur 1 de cartes à mémoire selon l'invention se compose principalement d'un boîtier 2 en matière plastique ou autre, renfermant une carte 3 sous forme d'un circuit imprimé pourvu de circuits intégrés et de composants électroniques connus en soi (non représentés). Bien entendu, le circuit imprimé 3 n'est pas nécessairement solidaire du boîtier 2, mais selon une variante de réalisation, il peut être constitué par la carte-mère d'un appareil, cette carte-mère portant les éléments nécessaires au guidage et/ou positionnement de la carte à mémoire.

Le boîtier 2 est pourvu d'un logement 4 destiné à recevoir, par l'intermédiaire d'une fente frontale 5, une carte à mémoire 6 à des fins de lecture de celle-ci. Il est à noter que, comme connu en soi, la forme et la dimension de la fente frontale 5 tiennent compte des bossages de la carte à mémoire, correspondant à l'écriture en relief d'un certain nombre de caractères d'identification, et à la présence sur la carte à mémoire 6 d'une puce mémoire 30.

Bien entendu, comme la puce 30 de la carte à mémoire 6 comporte un certain nombre de zones de contact électrique de petite dimension, il est indispensable que le lecteur 1 soit pourvu de moyens de lecture aptes à assurer le contact entre les zones de contact de la carte à mémoire 6 et les zones correspondantes des circuits électroniques de la carte à circuit imprimé 3.

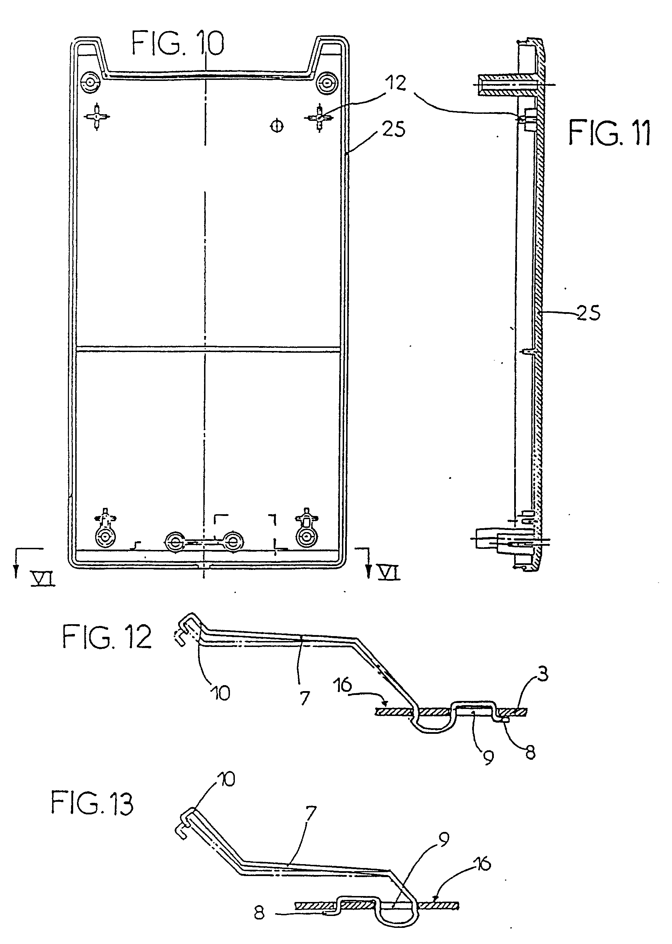

Selon l'invention, ces contacts électriques sont constitués par des contacts métalliques 7 flexibles et élastiques, représentés sur les figures 12 et 13. Ces contacts métalliques 7 comportent de préférence une extrémité 8 recourbée et une forme qui permet l'encliquetage dans des fentes 9 aménagées sur la carte à circuit imprimé 3, tel que schématisé sur la figure 3.

Ainsi, les contacts métalliques 7 possèdent, après soudure, une extrémité 8 solidaire de la carte à circuit imprimé 3, et une extrémité libre 10. Alors que l'extrémité recourbée 8 des contacts métalliques 7 est reliée aux bornes des circuits électroniques du lecteur 1, l'extrémité libre 10 est destinée à établir un contact électrique entre les zones de contact d'une carte à mémoire 6 et les circuits électroniques précités. Il est à noter que la grande élasticité et la forme arrondie du contact évite une usure par un frottement trop important. Il en résulte qu'un grand nombre de manoeuvres est possible.

Le lecteur 1 selon l'invention devant être d'une grande simplicité, l'introduction d'une carte à mémoire 6 dans la fente frontale 5, puis le positionnement de la carte à mémoire 6 dans le logement 4 du lecteur 1, doivent pouvoir être effectués manuellement. En outre, pour permettre un usage domestique de ce lecteur de cartes, il est nécessaire que l'on puisse introduire manuellement une carte à mémoire un grand nombre de fois sans détériorer les contacts électriques et sans que de mauvais contacts n'apparaissent à l'usage.

De ce fait, contrairement aux dispositifs connus dans l'état actuel de la technique et utilisant des contacts courts et rigides, les contacts métalliques 7 selon l'invention sont relativement longs, flexibles et élastiques, le contact électrique étant automatiquement établi par le frottement entre l'extrémité 10 d'un contact métallique 7 et une zone de contact de la carte à mémoire, lors de l'introduction de celle-ci dans le logement 4 du lecteur. Il en résulte que seule la pression exercée sur une zone de contact d'une carte à mémoire 6 sous l'effet de la déformation élastique d'un contact métallique 7, permet d'établir une liaison électrique entre ladite carte à mémoire et les circuits de lecture de l'appareil.

En outre, des considérations précédentes, il découle qu'il est absolument fondamental pour le bon fonctionnement de l'appareil que, d'une part, les contacts métalliques 7 soient correctement positionnés et guidés à l'intérieur du lecteur, et que, d'autre part, l'introduction d'une carte à mémoire 6 dans le logement 4 puisse être obtenue avec une grande précision, la position finale de la carte à mémoire devant, en outre, être détectée pour permettre une mise sous tension adéquate du circuit intégré de la carte à mémoire.

A cet effet, le lecteur 1 de cartes selon l'invention comporte des moyens de guidage et de positionnement des extrémités libres des contacts métalliques 7, coopérant avec des moyens de guidage et de positionnement de la carte à mémoire dans le lecteur.

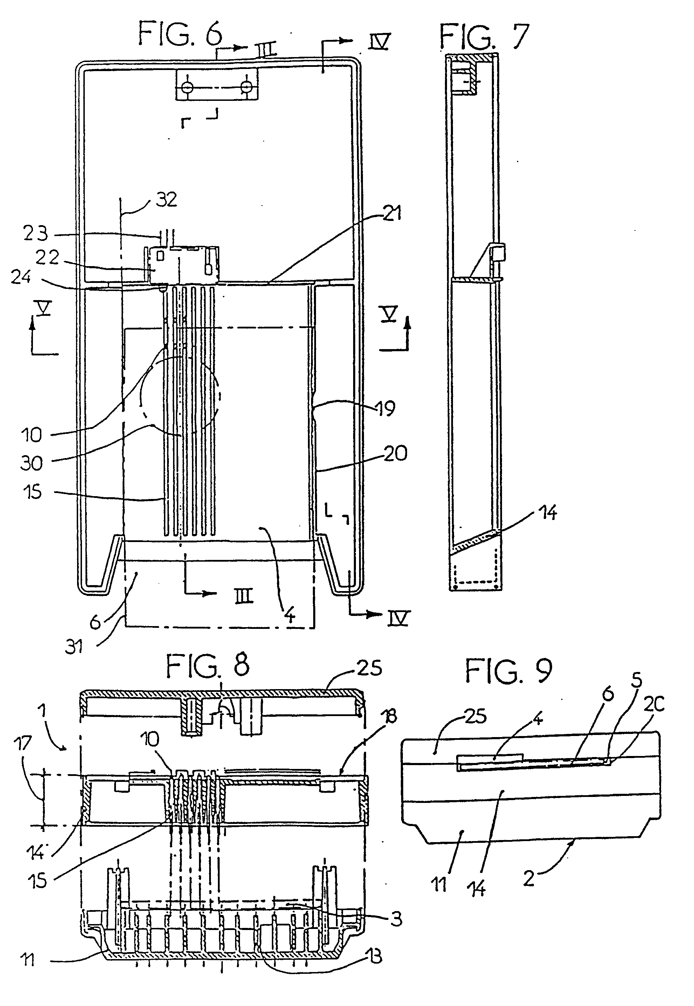

De ce fait, le boîtier 2 du lecteur 1 comporte une partie supérieure ou couvercle 25 (figures 10, 11) pourvu de butées verticales 12 permettant le positionnement précis et la fixation de la carte à circuit imprimé 3 sur ledit couvercle 25 du lecteur. Cependant, le positionnement du circuit imprimé 3 peut aussi se faire par rapport à la partie inférieure 11, moyennant le retournement du circuit imprimé 3 (figure 8).

En outre, comme il est aisé d'aménager avec précision les fentes 9 sur la carte 3 (figure 3), les contacts métalliques 7 auront une position très bien déterminée, d'une part, par rapport à la carte 3 et, d'autre part, par rapport au couvercle 25 du boîtier 2. De plus, afin d'améliorer la précision du positionnement vertical des contacts métalliques 7 par rapport au couvercle 25 ou la partie inférieure 11, cette dernière est pourvue (figure 8) d'un certain nombre d'ailes verticales 13, toutes de même hauteur et constituant un bon plan horizontal de référence pour la carte 3, et par suite, pour les contacts métalliques 7.

Cependant, il s'avère d'une nécessité absolue que les contacts métalliques 7 soient également guidés latéralement afin d'éviter qu'ils ne dévient latéralement lors d'un contact avec les zones de contact d'une carte à mémoire 6. A cet effet, le boîtier 2 comporte une partie médiane 14 fixée au-dessus de la partie inférieure 11. Cette partie médiane 14, schématisée sur les figures 6, 7 et 8, comporte une série de fentes verticales calibrées 15 dans lesquelles s'engagent les extrémités libres 10 des contacts métalliques 7, qui sont proéminents par rapport à la face supérieure 16 du circuit intégré 3. Bien entendu, la hauteur 17 de la partie médiane 14 du boîtier 2 est prédéterminée de telle manière à ce que les extrémités libres 10 des contacts métalliques 7 soient légèrement saillantes par rapport à la surface supérieure 18 de ladite partie médiane 14. De plus, selon l'invention, cette surface supérieure 18 correspond à la face inférieure du logement 4 (figure 9) du boîtier 2. De ce fait, lors de l'introduction d'une carte à mémoire 6 dans la fente frontale 5 du boîtier 2, les extrémités libres 10 des contacts métalliques 7 s'effacent jusqu'à affleurer la surface supérieure 18, puis viennent en contact avec les zones de contact correspondantes situées sous la carte à mémoire 6 utilisée.

Bien entendu, il ne suffit pas que les contacts métalliques 7 soient bien positionnés et guidés latéralement, encore faut-il qu'il en soit de même pour la carte à mémoire 6. A cet effet, la fente frontale 5 du boîtier 2 possède une largeur très légèrement supérieure à celle de la carte à mémoire 6, afin de rendre possible un bon guidage latéral de la carte à mémoire.

Dans le même but, la partie médiane 14 du boîtier 2 est pourvue d'un bossage 19 élastique aménagé par découpe de l'une des faces latérales 20 du logement 4, ceci afin que la carte à mémoire 6 puisse être introduite dans l'appareil sans qu'il existe un jeu latéral. Ce bossage élastique 19 a pour but de serrer l'axe de référence longitudinal 31 de la carte 6, défini par les normes ISO, contre l'axe de référence longitudinal 32 du logement 4. Les cotes mécaniques des fentes verticales calibrées 15 sont également référencées par rapport à l'axe de référence 32, qui coïncide avec l'axe 31 lorsque la carte 6 est positionnée dans le logement 4.

Par ailleurs, il s'avère également nécessaire de bien contrôler la position longitudinale de la carte à mémoire 6 dans le logement 4 du boîtier 2. A cet effet, le fond 21 du logement 4 est garni d'un micro-interrupteur 22 représenté sur les figure 4 et 5. Ce micro-interrupteur 22 possède des bornes 23 connectées aux circuits de la carte à circuit imprimé 3 et permettant la mise sous tension des circuits de mémoire de la carte à mémoire 6. Le micro-interrupteur 22 est également pourvu d'un ergot de contact 24 mobile, actionné uniquement lorsque la carte à mémoire 6 a été suffisamment enfoncée dans le logement 4 par l'utilisateur. Dans cette position, la lecture des informations contenues par la carte à mémoire peut commencer, et elle s'achève dès qu'un nouveau mouvement de l'ergot de contact 24 du micro-interrupteur 22 signale le retrait de la carte à mémoire.

Bien évidemment, le boîtier 2 du lecteur 1 est recouvert par le couvercle 25 disposé solidairement au-dessus de la partie médiane 14.

Lors de l'utilisation du lecteur de cartes à mémoire décrit précédemment, il suffit d'enfoncer manuellement une carte à mémoire 6 dans la fente frontale 5 de l'appareil. Lorsque cette carte à mémoire 6 arrive au fond du logement 4, l'ensemble des contacts métalliques 7 est positionné en face des contacts électriques respectifs de la carte à mémoire 6. Cette dernière est mise sous tension une fois qu'elle est correctement positionnée, c'est-à-dire lorsque le micro-interrupteur 23 est fermé par la carte à mémoire venant en butée au fond 21 du logement de l'appareil.

Une autre solution qui permet l'économie d'un micro-interrupteur consiste en une détection électronique de position de carte par mesure de consommation de courant de la puce 30 située sur la carte 6. Une troisième solution de détection de positionnement de la carte consiste en une barrière lumineuse.

Les avantages liés au lecteur de cartes à mémoire conforme à l'invention consistent essentiellement en ce qu'il s'agit d'un appareil dont le coût de production en série n'est que de l'ordre de un dixième du prix d'un appareil professionnel. De ce fait, ce lecteur de cartes à mémoire devrait permettre le développement et la généralisation des cartes à mémoire pour des utilisations grand public à vocation domestique et faire évoluer la monétique électronique.

En outre, la grande simplicité de conception et d'utilisation de ce lecteur en font un dispositif particulièrement fiable prédestiné à une production de série.

Enfin, il faut noter que les moyens de guidage latéral des contacts métalliques 7 et de la carte à mémoire 6 ainsi que les moyens de positionnement du circuit imprimé 3 ou de positionnement longitudinal de la carte à mémoire 6, peuvent être aisément intégrés dans un boîtier différent de celui décrit, et notamment dans un ensemble plus complexe intégrant des fonctions plus larges que la lecture de cartes à mémoire.

## Revendications

1. Lecteur (1) de cartes, notamment de cartes à mémoire (6) ou autres,
   - comprenant dans un boîtier (2) une carte à circuit imprimé (3), pourvue de composants électroniques pour le traitement et/ou la consultation des données renfermées par la carte à mémoire (6),
   - le boîtier comprenant une fente frontale (5) d'introduction de la carte à mémoire (6),
   - le lecteur comprenant des contacts (7) flexibles établissant le contact électrique entre la carte à circuit imprimé (3) et les zones de contact de la puce (30) de la carte à mémoire (6), l'une des extrémités (8) des contacts flexibles étant solidaire de la carte à circuit imprimé (3) connectée électriquement aux bornes de celle-ci, et positionée dans des fentes (9) aménagées dans celle-ci

   caractérisé en ce que le boitier comprend une partie médiane (14) surmontée d'un couvercle (25) solidaire d'une partie inférieure (11) positionnant précisément la carte à circuit imprimé (3), et en ce que des extrémités libres (10) des contacts (7) flexibles sont guidées et positionnées latéralement par des moyens de guidage de la partie médiane (14) constitués par des fentes longitudinales calibrées (15) aménagées dans la partie médiane (14) du boitier (2).

2. Lecteur (1) selon la revendication 1, caractérisé par le fait que lesdits contacts (7) flexibles sont constitués par des contacts métalliques (7) en forme de tige élastique, dont l'autre extrémité (10) étant libre est dirigée vers les zones de contact électrique de la carte à mémoire (6).

3. Lecteur (1) selon la revendication 1, caractérisé en ce que des moyens de guidage et de positionnement de la carte à mémoire (6) dans le lecteur (1) sont constitués par un logement (4) accessible par la fente frontale (5) et pourvu d'un bossage élastique (19) de guidage latéral, aménagé dans la partie médiane (14) du boîtier (2).

4. Lecteur (1) selon les revendications 1 et 3, caractérisé par le fait que la partie inférieure (11) du boîtier (2) comporte des ailes verticales (13) supportant horizontalement la carte à circuit imprimé (3).

5. Lecteur (1) selon la revendication 1, caractérisé par le fait que le couvercle (25) du boîtier (2) comporte des moyens de positionnement de la carte à circuit imprimé (3), constitués par des butées verticales (12).

6. Lecteur (1) selon les revendications 1 et 5, caractérisé par le fait qu'il comporte un micro-interrupteur (22) disposé au fond (21) du logement (4), ledit micro-interrupteur (22) étant actionné par la carte à mémoire (6) arrivée en fin de course au fond du logement (4), pour la mise sous tension de la carte à mémoire (6).

7. Lecteur (1) selon la revendication 1, caractérisé par le fait que la détection de position de la carte (6) est effectuée par mesure de la consommation de courant de la puce (30) située sur la carte à mémoire (6).

## Claims

1. Reader (1) of cards, especially of memory cards (6) or the like,
   - comprising, in a housing (2), a printed-circuit card (3) equipped with electronic components for the processing and/or call-up of the data contained in the memory card (6),
   - the housing having a front slit (5) for inserting the memory card (6),
   - the reader having flexible contacts (7) making electrical contact between the printed-circuit card (3) and the contact zones of the chip (30) of the memory card (6), one of the ends (8) of the flexible contacts being fixed to the printed-circuit card (3), being connected electrically to the terminals of the latter and being positioned in slots (9) arranged in this,

   characterised in that the housing comprises a middle part (14) surmounted by a lid (25) fixed to a lower part (11) exactly positioning the printed-circuit card (3), and in that free ends (10) of the flexible contacts (7) are guided and positioned laterally by means for guiding the middle part (14), which consist of calibrated longitudinal slots (15) arranged in the middle part (14) of the housing (2).

2. Reader (1) according to Claim 1, characterised in that the said flexible contacts (7) consist of metal contacts (7) in the form of an elastic rod, the other end (10) of which, being free, is directed towards the electrical contact zones of the memory card (6).

3. Reader (1) according to Claim 1, characterised in that means for guiding and positioning the memory card (6) in the reader (1) consist of a receptacle (4) accessible via the front slit (5) and equipped with an elastic boss (19) for lateral guidance which is arranged in the middle part (14) of the housing (2).

4. Reader (1) according to Claims 1 and 3, characterised in that the lower part (11) of the housing (2) has vertical wings (13) supporting the printed-circuit card (3) horizontally.

5. Reader (1) according to Claim 1, characterised in that the lid (25) of the housing (2) has means for positioning the printed-circuit card (3) which consist of vertical stops (12).

6. Reader (1) according to Claims 1 and 5, characterised in that it possesses a microswitch (22) located at the bottom (21) of the receptacle (4), the said microswitch (22) being actuated by the memory card (6) reaching the end of its travel at the bottom of the receptacle (4), for applying voltage to the memory card (6).

7. Reader (1) according to Claim 1, characterised in that the position of the card (6) is detected by measuring the current consumption of the chip (30) located on the memory card (6).

**Patentansprüche**

1. Kartenleser, insbesondere für Speicherkarten (6) oder dgl.,
   - mit einer in einem Gehäuse (2) angeordneten Karte (3) mit gedruckter Schaltung, die elektronische Bauelemente zur Verarbeitung und/oder zum Lesen der auf der Speicherkarte (6) enthaltenen Daten aufweist,
   - mit einem frontseitigem Schlitz (5) im Gehäuse (2) für das Einführen der Speicherkarte (6) und
   - mit beweglichen Kontakten (7), die elektrischen Kontakt zwischen der Karte (3) mit gedruckter Schaltung und Kontaktbereichen von auf der Speicherkarte (6) angeordneten Chips (30) herstellen, wobei ein Ende (8) der beweglichen Kontakte (7) zur Karte (3) mit gedruckter Schaltung gerichtet ist und mit deren Anschlußpunkten elektrisch verbunden ist und wobei dieses Ende (8) in Schlitzen (9) der Karte (3) mit gedruckter Schaltung geführt ist, **dadurch gekennzeichnet, daß** das Gehäuse (2) einen mittleren Bereich (14) aufweist, der von einer mit einem unteren Teil (11) verbunden Kappe (25) bedeckt ist und der die Karte (3) mit gedruckter Schaltung genau positioniert, und daß freie Enden (10) der beweglichen Kontakte (7) durch Führungsmittel des mittleren Bereichs (14) seitlich geführt und positioniert sind, welche durch maßgerechte Längsschlitze (15), die im mittleren Bereich (14) des Gehäuses (2) angeordnet sind, gebildet sind.

2. Leser nach Anspruch 1, **dadurch gekennzeichnet, daß** die beweglichen Kontakte (7) als Metallkontakte (7) länglicher Form ausgebildet sind, deren freie Enden (10) zu den elektrischen Kontaktbereichen der Speicherkarte (6) hin gerichtet sind.

3. Leser nach Anspruch 1, **dadurch gekennzeichnet, daß** als Führungs- und Positioniermittel für die Speicherkarte (6) im Leser (1) eine im mittleren Bereich (14) des Gehäuses (2) angeordnete Aufnahme (4) vorgesehen ist, welche durch den Frontschlitz (5) zugänglich ist und eine elastische Wulst (19) zur seitlichen Führung aufweist.

4. Leser nach einem der Ansprüche 1 bis 3, **dadurch gekennzeichnet, daß** im unteren Teil (11) des Gehäuses (2) senkrecht verlaufende Rippen (13) angeordnet sind, welche die waagrecht aufliegende Karte (3) mit gedruckter Schaltung tragen.

5. Leser nach Anspruch 1, **dadurch gekennzeichnet, daß** die Abdeckung (25) des Gehäuses (2) Positioniermittel für die Karte (3) mit gedruckter Schaltung aufweisen, die in Form senkrechter Anschläge (12) ausgebildet sind.

6. Leser nach einem der Ansprüche 1 bis 5, **dadurch gekennzeichnet, daß** der Leser (1) einen Mikroschalter (22) aufweist, welcher im Boden (21) der Aufnahme (4) angeordnet ist und welcher zur Spannungsversorgung der Speicherkarte (6) durch die Speicherkarte (6) betätigt wird, wenn diese beim Einsetzen schließlich den Boden der Aufnahme (4) berührt.

7. Leser nach Anspruch 1, **dadurch gekennzeichnet, daß** zur Feststellung der Lage der Speicherkarte (6) eine Strommessung für den auf der Speicherkarte (6) angeordneten Chip (30) vorgenommen wird.

FIG. 1

FIG. 2

FIG. 3

FIG. 4

FIG. 5

FIG. 6

FIG. 7

FIG. 8

FIG. 9

FIG. 10

FIG. 11

12

25

25

VI

VI

FIG. 12

10

7

16

3

9

8

FIG. 13

10

7

9

16

8